# EUROPÄISCHE PATENTANMELDUNG

(11) **EP 1 331 558 A2**
(43) Veröffentlichungstag der Anmeldung: **30.07.2003**
(21) Anmeldenummer: 02028352.9
(22) Anmeldetag: 17.12.2002
(51) Int. Cl.: G06F 9/44

(54) **Spracherweiterungsmittel für eine Datenverarbeitungseinheit**

(30) Priorität: 18.12.2001 DE 10162248
(71) Anmelder: SIEMENS AKTIENGESELLSCHAFT, 80333 München (DE)
(72) Erfinder: Gussmann, Klaus-Peter, 76187 Karlsruhe (DE)

(57) **Zusammenfassung**

Es werden Spracherweiterungsmittel für eine Datenverarbeitungseinheit vorgeschlagen, durch welche Sprachelemente in ein Treiberprogramm einbindbar sind, die jeweils einer Sprache zugeordnet sind.

## Beschreibung

Die Erfindung betrifft Spracherweiterungsmittel für eine Datenverarbeitungseinheit, durch welche Sprachelemente in ein Treiberprogramm einbindbar sind, die jeweils einer Sprache zugeordnet sind. Darüber hinaus betrifft die Erfindung eine Datenverarbeitungseinheit mit derartigen Spracherweiterungsmitteln.

Aus der DE 198 12 425 A1 ist eine programmierbare Steuerung mit einer menügeführten Benutzeroberfläche bekannt, deren Sprache veränderbar ist.

DE 199 48 024 A1 offenbart eine Vorrichtung zur Anzeige von Informationen, welche in verschiedenen Sprachen auf einer Anzeigevorrichtung darstellbar sind.

DE 100 12 518 A1 beschreibt eine Frankiermaschine mit Sprachumschaltung. Dort ist eine Benutzerschnittstelle mit Sprachumschaltmitteln versehen, die eine Umschaltung in eine zu benutzende Sprache ermöglichen.

Der vorliegenden Erfindung liegt die Aufgabe zugrunde, Spracherweiterungsmittel für eine Datenverarbeitungseinheit anzugeben, durch welche einer Sprache zugeordnete Sprachelemente in ein Treiberprogramm einbindbar sind. Darüber hinaus ist eine Datenverarbeitungseinheit mit derartigen Spracherweiterungsmitteln anzugeben.

Diese Aufgabe wird im Hinblick auf die Spracherweiterungsmittel durch die im Anspruch 1, im Hinblick auf die Datenverarbeitungseinheit durch die im Anspruch 3 angegebenen Maßnahmen gelöst.

Mit einer Ausgestaltung der Erfindung gemäß den im Anspruch 2 angegebenen Maßnahmen ist es möglich, nur eine ausgewählte Anzahl von ermittelten Sprachelementen in das Treiberprogramm einzubinden. Dadurch wird der erforderliche Speicherplatz in einem Hauptspeicher der Datenverarbeitungseinheit vermindert.

Anhand der Zeichnung, in der ein Ausführungsbeispiel der Erfindung veranschaulicht ist, werden im Folgenden die Erfindung sowie Ergänzungen und Weiterbildungen näher beschrieben und erläutert.

Es zeigen:
- Figur 1: eine Datenverarbeitungseinheit und
- Figur 2: eine Bedieneroberfläche einer Datenverarbeitungseinheit.

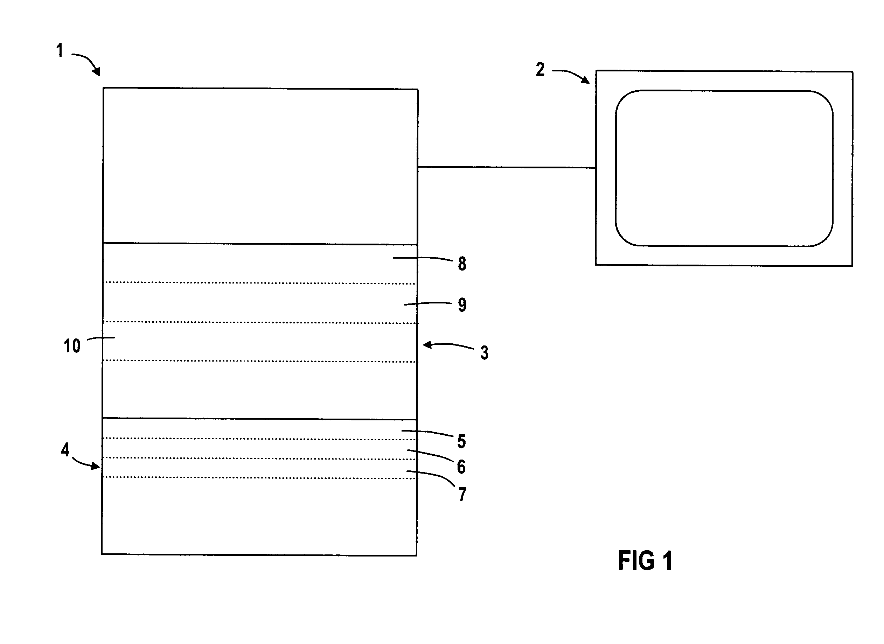

In Figur 1 ist mit 1 eine Datenverarbeitungseinheit bezeichnet, die eine Anzeigeeinheit 2, einen Hauptspeicher 3 und einen Datenträger, z. B. einen Datenträger in Form einer Festplatte 4, umfasst. Auf der Festplatte 4 sind im vorliegenden Beispiel drei Sprachelemente 5, 6, 7 hinterlegt, welche in ein Treiberprogramm 8 einbindbar sind und von denen das Sprachelement 5 nach dem Einbinden in das Treiberprogramm 8 zur Darstellung von Informationen auf der Anzeigeeinheit 2 in deutscher, das Sprachelement 6 zur Darstellung der Informationen in englischer und das Sprachelement 7 zur Darstellung der Informationen in französischer Sprache vorgesehen ist.
Zu einem geeigneten Zeitpunkt, z. B. nach dem Hochlaufen der Datenverarbeitungseinheit, werden Spracherweiterungsmittel 9 und das Treiberprogramm 8, welche auf der Festplatte 4 oder in einem hier nicht dargestellten ROM der Datenverarbeitungseinheit 1 hinterlegt sind, in den Hauptspeicher 3 geladen und gestartet. Die Spracherweiterungsmittel 9 ermitteln die auf der Festplatte 4 gespeicherten Sprachelemente und binden diese Sprachelemente in das Treiberprogramm 8 ein. Im vorliegenden Beispiel sind die Sprachelemente 5, 6, 7 in das Treiberprogramm 8 einbindbar, wodurch eine Darstellung von Informationen in deutscher, englischer und französischer Sprache möglich ist, wobei ein Anwender über eine hier nicht dargestellte Benutzerschnittstelle auswählen kann, in welcher Sprache Informationen dargestellt werden sollen.

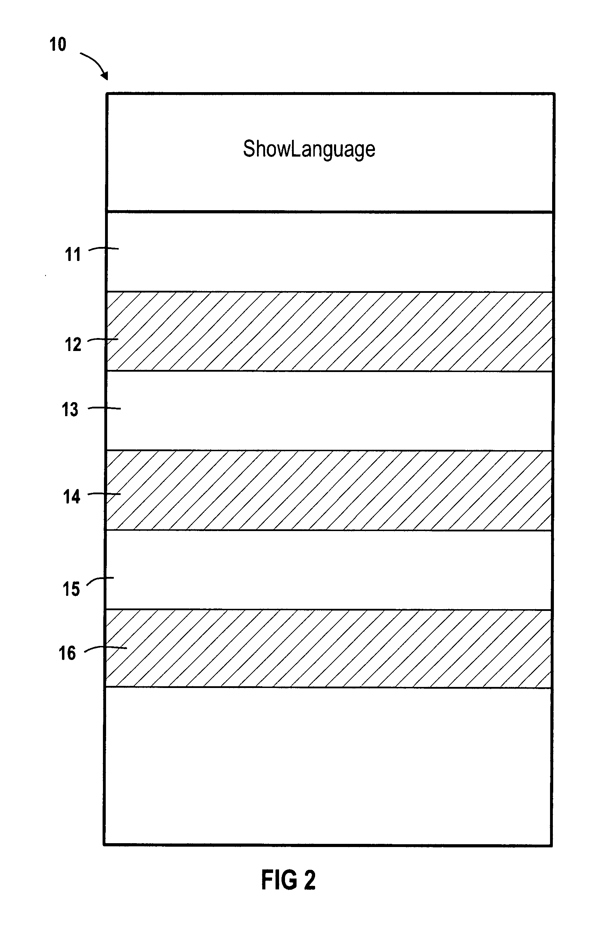

Damit nicht von vornherein alle auf der Festplatte 4 hinterlegten Sprachelemente in das Treiberprogramm 8 eingebunden werden, ist die Benutzerschnittstelle derart ausgebildet, dass lediglich ausgewählte Sprachelemente aus einer Vielzahl von ermittelten Sprachelementen in das Treiberprogramm eingebunden werden. In diesem Zusammenhang wird auf Figur 2 verwiesen, in welcher eine Bedieneroberfläche der Benutzerschnittstelle dargestellt ist. Einem Anwender ist über diese Bedieneroberfläche eine Liste 10 von ermittelten Sprachelementen 11, 12, ... 16 auf der Anzeigeeinheit 2 der Datenverarbeitungseinheit darstellbar, wobei der Anwender die gewünschte Sprache auswählen kann, indem er das dieser Sprache zugeordnete Sprachelement aus der Liste markiert. Im vorliegenden Beispiel sind die Sprachelemente 12, 14, 16 markiert (schraffiert dargestellt), wodurch diese Sprachelemente 12, 14, 16 in das Treiberprogramm 8 eingebunden und dem Anwender bereitgestellt werden. Ein Anwender kann in einem weiteren Schritt über die Benutzerschnittstelle auswählen, in welcher der eingebundenen Sprache oder Sprachen der Sprachelemente 12, 14, 16 Informationen auf der Anzeigeeinheit 2 dargestellt werden sollen.

## Patentansprüche

1. Spracherweiterungsmittel für eine Datenverarbeitungseinheit, durch welche Sprachelemente (5, 6, 7; 11 ... 16) in ein Treiberprogramm (8) einbindbar sind, die jeweils einer Sprache zugeordnet sind,
- wobei das Treiberprogramm (8) zur Darstellung von diesen Sprachelementen zugeordneten Sprachen auf einer Anzeigeeinheit der Datenverarbeitungseinheit vorgesehen ist und
- wobei die Spracherweiterungsmittel die auf einem Datenträger der Datenverarbeitungseinheit hinterlegbaren Sprachelemente ermitteln, die durch die Spracherweiterungsmittel in das Treiberprogramm (8) einbindbar sind.

2. Spracherweiterungsmittel nach Anspruch 1, **dadurch gekennzeichnet, dass** die Spracherweiterungsmittel mit einer Benutzerschnittstelle (10) versehen sind, über welche die ermittelten Sprachelemente anzeigbar und auswählbar sind, wobei die Spracherweiterungsmittel nur ausgewählte Sprachelemente in das Treiberprogramm einbinden.

3. Datenverarbeitungseinheit, insbesondere Personalcomputer, mit Spracherweiterungsmitteln nach Anspruch 1 oder 2.
